# EUROPÄISCHE PATENTSCHRIFT

(11) **EP 0 983 794 B1**
(45) Veröffentlichungstag und Bekanntmachung des Hinweises auf die Patenterteilung: **09.02.2005**
(21) Anmeldenummer: 99116658.8
(22) Anmeldetag: 26.08.1999
(51) Int. Cl.: B01J 35/10, B01J 23/50, C10G 70/02, C10G 45/40, B01J 21/08

(54) **Katalysator und Verfahren zur Reinigung von Stoffströmen**
Catalyst and process for purifying material flows
Catalyseur et procédé de purification de flux de matières

(30) Priorität: 04.09.1998 DE 19840372
(43) Veröffentlichungstag der Anmeldung: 08.03.2000
(73) Patentinhaber: BASF AKTIENGESELLSCHAFT, 67056 Ludwigshafen (DE)
(72) Erfinder: Flick, Klemens, Prof. Dr., 76863 Herxheim (DE); Meissner, Ruprecht, 67273 Weisenheim (DE); Hefner, Werner, Dr., 68623 Lampertheim (DE); Feser, Rainer, Dr., 67269 Grünstadt (DE); Kunz, Fabian, Dr., 67112 Mutterstadt (DE)

(56) Entgegenhaltungen:
- EP-A- 0 569 624
- EP-A- 0 653 243
- EP-A- 0 807 615
- DE-A- 3 119 850
- DE-A- 19 710 762
- US-A- 2 837 587
- US-A- 3 537 981

## Beschreibung

Die vorliegende Erfindung betrifft einen Katalysator und ein Verfahren zur Entfernung von Alkinen, Dienen, einfach ungesättigten Kohlenwasserstoffen und/oder Sauerstoff aus Stoffströmen.

In vielen verschiedenen chemischen Verfahren wird ein Stoffstrom an einem oder mehreren Katalysatoren zu Reaktionsprodukten umgesetzt. Ein Beispiel eines solchen Verfahrens ist die Polymerisation von Olefinen wie Ethylen oder Propylen an Metallocenkatalysatoren zum entsprechenden Polyolefin.

Die in solchen Verfahren verwendeten Katalysatoren sind in den allermeisten Fällen empfindlich gegen bestimmte Verunreinigungen, sogenannte Katalysatorgifte, deren übermäßiger Kontakt mit dem Katalysator diesen in seinen Eigenschaften, wie Aktivität, Selektivität oder Standzeit beeinträchtigt. In der Regel werden durch das Katalysatorgift aktive Zentren des Katalysators belegt und stehen so nicht mehr zur Katalyse der gewünschten Reaktion zur Verfügung. Bei der Verwendung von Katalysatoren ist daher Sorge dafür zu tragen, daß die Einsatzstoffströme, mit denen die Katalysatoren beaufschlagt werden, keine oder höchstens die Menge an Katalysatorgiften mit sich führen, die bei wirtschaftlich vertretbarem Aufwand zur Entfernung von Katalysatorgiften einen wirtschaftlich zufriedenstellenden Betrieb des Katalysators im Hinblick auf Selektivität, Aktivität und Standzeit ermöglichen. Bekannte Katalysatorgifte für viele metallische Katalysatoren sind beispielsweise Schwefel, Arsen und Antimon.

Manche Verunreinigungen, die in Einsatzstoffströmen enthalten sind, schädigen den verwendeten Katalysator zwar nicht dauerhaft, führen aber zu unerwünschten Nebenreaktionen und vermindern so beispielsweise die Produktqualität. Ein Beispiel für derartige Verunreinigungen sind Alkine in Olefinen bei der metallocenkatalysierten Olefinpolymerisation, die wichtige Produkteigenschaften wie die Molekulargewichtsverteilung, die Stereospezifität der Polymerisation oder die Stabilität der polymeren Produkte beeinträchtigen. Solche Probleme können selbstverständlich auch bei unkatalysierten Reaktionen auftreten.

In aller Regel durchläuft ein Einsatzstoffstrom daher vor seinem Einsatz in einer Reaktion ein Reinigungsverfahren zur Abtrennung von Verunreinigungen, die in der betreffenden Reaktion stören würden. Es sind zahlreiche derartige Reinigungsverfahren bekannt, beispielsweise Gaswäscheverfahren mit verschiedenen Lösungsmitteln, Verfahren zur Absorption von Verunreinigungen an Adsorbentien wie etwa Zeolithen oder Aktivkohlen, oder Verfahren, in denen störende Verunreinigungen durch Membranen aus einem Stoffstrom entfernt werden.

US-A 4,861,939 lehrt beispielsweise ein Verfahren zur Entarsenierung von Naphtha, bei dem das Naphtha durch Kontakt mit einem Nickeloxid und Nickel enthaltenden Adsorbens von arsenhaltigen Verbindungen weitgehend befreit wird.

Verfahren, in denen Katalysatoren eingesetzt werden, um Stoffströme zu reinigen, sind seltener und sind meist nur auf die Entfernung weniger spezieller Verunreinigungen in speziellen Stoffströmen beschränkt. Die hydrierende Entschwefelung von Kohlenwasserstoffen an CoO/MoO₃- oder NiO/MoO₃-Katalysatoren bei 350 bis 450°C und anschließende Absorption des entstehenden Schwefelwasserstoffs; die Hoch- oder Tieftemperaturkonvertierung von Kohlenmonoxid mit Wasser zu Kohlendioxid und Wasserstoff an FeO/Cr₂O₃oder CoO/MoO₃-Katalysatoren und die Methanisierung von CO und CO₂ mit Wasserstoff an Nickelkatalysatoren stellen die bekanntesten Verfahren dar, sie sind allgemeines Lehrbuchwissen.

In Oil & Gas Journal, Ausgabe Oktober 1994, Seiten 50 bis 55, ist der sogenannte "Triple P" oder "Propylene Polishing Process" der Fina Research SA, Feluy, Belgien, beschrieben. Mit diesem Verfahren werden schwefelhaltige Verbindungen, Arsan und Stiban, Sauerstoff, CO und CO₂ sowie Wasserstoff aus Propylen entfernt, um so hochreines Propylen für die Polymerisation zu erzeugen. Das Verfahren nutzt ein spezielles, nicht im Detail offenbartes Adsorbens zur adsorptiven Entfernung aller Verunreinigungen außer Wasserstoff, wobei dieses Adsorbens zusätzlich als Katalysator der Hydrierung von Propen mit Wasserstoff wirkt und so den Wasserstoff katalytisch entfernt.

US-A 3,420,618 lehrt ein Verfahren zur Entfernung von Acetylen, Ethylen und Sauerstoff aus einem Synthesegasstrom durch Hydrierung an einem Katalysator, der aus Palladium auf einem Aluminiumoxidträger besteht.

In einem Vortrag von D. J. Artrip, C. Herion und R. Meissner auf der Konferenz "MetCon '93", Session Four, in Houston, Texas, USA, wurde am 27.05.1993 ein vierstufiges Verfahren zur Entfernung von verschiedenen Verunreinigungen aus Olefinströmen für Polymerisationsreaktionen offenbart. In diesem Verfahren werden in einem ersten Schritt arsen- und schwefelhaltige Verbindungen an einem aus Kupfer- und Zinkoxiden bestehenden Absorbens absorbiert. In einem zweiten Schritt werden Acetylene und Diene nach Zugabe einer zu ihrer Hydrierung ausreichenden Menge Wasserstoff an einem palladiumhaltigen Katalysator zu Olefinen hydriert. Im dritten Verfahrensschritt wird vorhandener Sauerstoff an einem metallischen Kupferkontakt entfernt. Im vierten und letzten Verfahrensschritt wird noch vorhandenes Rest-Kohlenmonoxid an einem Kupferoxidkatalysator zu Kohlendioxid umgewandelt und etwaiger Rest-Wasserstoff ebenfalls zu Wasser oxidiert.

Die Patentanmeldung DE 19710762.1 (Äquivalent: PCT EP98/01469) lehrt ein Verfahren zur Reinigung von Stoffströmen in nicht mehr als drei Verfahrensstufen, bei dem in der ersten Reinigungsstufe ein Palladium und Silber enthaltender Katalysator auf einem Siliciumdioxid enthaltenden Katalysatorträger zur Entfernung von Alkinen, Dienen, einfach ungesättigten Kohlenwasserstoffen und/oder Sauerstoff aus Stoffströmen verwendet wird.

DE-A 31 19 850 lehrt die Verwendung eines 0,05 bis 0,5 Gew.-% Palladium und 0,05 bis 1 Gew.-% Silber enthaltenden Katalysators auf einem Siliciumdioxid-Träger mit einer BET-Oberfläche von 10 bis 200 m²/g zur selektiven Hydrierung von Butadien in einem C₄-Schnitt. Spezielle Ausführungsformen dieses Katalysators sind die mit einem Gewichtsverhältnis von Silber zu Palladium von 0,7 zu 1 bis 3 zu 1 und von 1 zu 1 bis 2,5 zu 1.

JP-A 60-248237 offenbart ein Verfahren zur Herstellung eines Katalysatorträgers mit einem hohen Anteil an Makroporen. EP-A 653 243 lehrt ein Verfahren zur Herstellung von Katalysatoren, deren Aktivmasse im wesentlichen in Meso- und Makroporen vorliegt.

Angesichts der großen Bedeutung von gereinigten Stoffströmen in der industriellen Chemie besteht nach wie vor Bedarf an neuen und verbesserten Gasreinigungsverfahren. Es ist die Aufgabe der vorliegenden Erfindung, einen Katalysator und ein Reinigungsverfahren zu finden, mit dem Alkine, Diene, einfach ungesättigten Kohlenwasserstoffe und/oder Sauerstoff in einfacher Weise aus Stoffströmen entfernt werden können, ohne Nachteile der bekannten Katalysatoren und Verfahren in Kauf nehmen zu müssen. Es ist insbesondere eine Aufgabe der vorliegenden Erfindung, einen gegen Schwefel, Arsen und/oder Antimon enthaltende Katalysatorgifte weitgehend resistenten Katalysator zu finden, und ein Verfahren, mit dem Alkine, Diene, einfach ungesättigte Kohlenwasserstoffe und/oder Sauerstoff in einfacher Weise aus mit Schwefel, Arsen und/oder Antimon enthaltenden Katalysatorgiften belasteten Stoffströmen entfernt werden können.

Demgemäß wurde ein Katalysator gefunden, der in seiner Aktivmasse 0,05 bis 1,0 Gew.-% mindestens eines Metalls oder einer Verbindung eines Metalls der 10. Gruppe des Periodensystems der Elemente und 0,05 bis 1,0 Gew.-% mindestens eines Metalls oder einer Verbindung eines Metalls der 11. Gruppe des Periodensystems der Elemente, wobei das Gewichtsverhältnis des enthaltenen Metalls der 11. Gruppe zum enthaltenen Metall der 10. Gruppe von 0,95 bis 1,05 beträgt, und als Träger einen Siliciumdioxid enthaltenden Katalysatorträger mit einer BET-Oberfläche zwischen 2 und 400 m2/g enthält, und wobei mindestens 20 % des Gesamtporenvolumens des Katalysators in Poren mit einem Durchmesser oberhalb von 100 Nanometern vorliegt.

Weiterhin wurde ein Verfahren zur Entfernung von Alkinen, Dienen, einfach ungesättigten Kohlenwasserstoffen und/oder Sauerstoff aus Stoffströmen durch Hydrierung gefunden, das dadurch gekennzeichnet ist, daß man den Alkine, Diene, einfach ungesättigten Kohlenwasserstoffe und/oder Sauerstoff enthaltenden Stoffstrom in Gegenwart des erfindungsgemäßen Katalysators mit Wasserstoff umsetzt.

Der erfindungsgemäße Katalysator zeigt insbesondere eine sehr hohe Toleranz gegenüber Schwefel, Arsen und/oder Antimon enthaltende Katalysatorgifte im Einsatzstoff, die seinen Einsatz in einem Verfahren zur Hydrierung von Alkinen, Dienen, einfach ungesättigten Kohlenwasserstoffen und/oder Sauerstoff in derart belasteten Stoffströmen in wirtschaftlich befriedigender Weise ermöglicht. Der Katalysator wird durch Schwefel, Arsen und/oder Antimon enthaltende Katalysatorgifte im Einsatzstoff nicht deaktiviert, seine Aktivität zur Hydrierung von Alkinen, Dienen, einfach ungesättigten Kohlenwasserstoffen und/oder Sauerstoff wird von solchen Katalysatorgiften praktisch nicht beeinträchtigt, so daß hohe Standzeiten erreicht werden und gleichzeitig vor der Entfernung von Schwefel, Arsen und Antimon enthaltenden katalysetorgiften, die üblicherweise mit kupferhaltigen Kontaktmassen durchgeführt wird, etwaige vorhandene Alkine, insbesondere Acetylen, entfernt werden können und so jegliches Problem mit der Bildung von Kupferacetyliden oder sonstigen Ablagerungen ("Fouling") ausgeschlossen werden kann.

Der erfindungsgemäße Katalysator enthält jeweils mindestens 0,05 Gew.-%, berechnet als Metall, mindestens eines Metalls oder einer Verbindung eines Metalls der 11. Gruppe des Periodensystems der Elemente und mindestens eines Metalls oder einer Verbindung eines Metalls der 10. Gruppe des Periodensystems der Elemente. Beispielsweise enthält der Katalysator jeweils mehr als 0,1 Gew.-% und in bevorzugter Weise jeweils mehr als 0,2 Gew.-%.

Der Katalysator enthält jeweils höchstens 1,5 Gew.-% der Metalle oder Metallverbindungen, beispielsweise jeweils weniger als 1,0 Gew.-% und in bevorzugter Weise jeweils weniger als 0,7 Gew.-%.

Die Bezifferung der Gruppen des Periodensystems der Elemente richtet sich nach der aktuellen Numerierung der Internationalen Union für Reine und Angewandte Chemie (IUPAC). Die 10. Gruppe umfaßt die Elemente Nickel, Palladium und Platin und die 11. Gruppe die Elemente Kupfer, Silber und Gold. Der Katalysator enthält als Metall oder Verbindung eines Metalls der 10. Gruppe beispielsweise Palladium oder eine Palladium enthaltende Verbindung, in bevorzugter Weise als einziges Metall oder einzige Verbindung eines Metalls dieser Gruppe, und als Metall oder Verbindung eines Metalls der 11. Gruppe beispielsweise Silber oder eine Silber enthaltende Verbindung, in bevorzugter Weise als einziges Metall oder einzige Verbindung eines Metalls dieser Gruppe. In bevorzugter Weise enthält der Katalysator in seiner Aktivmasse metallisches Palladium und metallisches Silber, in besonders bevorzugter Weise besteht die Aktivmasse im wesentlichen aus metallischem Palladium und metallischem Silber.

Das Gewichtsverhältnis des enthaltenen Metalls der 11. Gruppe zum enthaltenen Metall der 10. Gruppe beträgt 0,95 bis 1,05. Dieses Verhältnis ist beispielsweise größer als 0,97 und bevorzugterweise größer als 0,985. Es ist beispielsweise kleiner als 1,03 und bevorzugterweise kleiner als 1,015. In ganz besonders bevorzugter Weise beträgt es 1.

Der Katalysator enthält einen Katalysatorträger, der Siliciumdioxid enthält und eine BET-Oberfläche zwischen 2 und 400 m²/g aufweist. Die BET-Oberfläche beträgt beispielsweise mehr als 5 m²/g und bevorzugterweise mehr als 10 m²/g. Sie beträgt beispielsweise weniger als 300 m²/g, bevorzugterweise weniger als 200 m²/g und in besonders bevorzugter Form weniger als 40 m²/g. In bevorzugter Weise enthält der Katalysatorträger Kieselgur.

Der Katalysator weist Meso- und/oder Makroporen auf. Unter Mesoporen sind Poren mit einem Durchmesser von 20 bis 100 Nanometer und unter Makroporen solche mit einem Durchmesser von mehr als 100 Nanometer zu verstehen. Im allgemeinen liegen mindestens 20 % des gesamten Porenvolumens des Katalysators in Makroporen vor. Vorzugsweise liegen mindestens 30 % des Gesamtporenvolumens in Makroporen vor und in besonders bevorzugter Weise mindestens 40 %.

In einer besonderen Ausführungsform des erfindungsgemäßen Katalysators ist die Aktivmasse im wesentlichen in den Meso- und Makroporen des Trägers enthalten. Im allgemeinen sind dabei mehr als 80 Gew.-% der Aktivmasse in Meso- und Makroporen enthalten, in besonders bevorzugter Form mindestens 90 Gew.-%.

Die erfindungsgemäßen Katalysatoren werden auf dem Fachmann bekannte Weise hergestellt. Dazu wird einerseits der Katalysatorträger hergestellt, dessen Porenstruktur und Oberfläche die Porenstruktur und Oberfläche des fertigen Katalysators wesentlich bestimmt. Die Herstellung des Trägers ist daher so durchzuführen, daß ein Katalysatorträger mit der gewünschten Porenstruktur und Oberfläche resultiert, Verfahren dazu sind jedem Fachmann bekannt. Der Katalysatorträger wird anschließend üblicherweise mit einer Lösung der Aktivmassenbestandteile oder ihrer Vorläuferverbindungen, beispielsweise der Nitrate, getränkt, getrocknet und die Aktivmassenbestandteile oder ihre Vorläufer durch Kalzination zur fertigen Aktivmasse umgewandelt, und/oder einer Reduktion der Komponenten der Aktivmasse zum Metall, die beispielsweise durch Hydrierung im Reaktor durchgeführt werden kann, unterworfen. Alternativ können die Aktivmassenbestandteile in den Träger bereits während seiner Herstellung eingearbeitet werden. Beispiele für anwendbare Verfahrensweisen geben JP-A 60-248 237 und EP-A 653 243.

Im erfindungsgemäßen Verfahren zur Entfernung von Alkinen, Dienen, einfach ungesättigten Kohlenwasserstoffen und/oder Sauerstoff aus Stoffströmen durch Hydrierung setzt man die im Stoffstrom enthaltenen Alkine, Diene, einfach ungesättigte Kohlenwasserstoffe und/oder Sauerstoff in Gegenwart des erfindungsgemäßen Katalysators mit Wasserstoff um. In einer besonderen Ausführungsform entfernt man Alkine, Diene, einfach ungesättigte Kohlenwasserstoffe und/oder Sauerstoff durch Umsetzung mit Wasserstoff in Gegenwart des erfindungsgemäßen Katalysators aus mit Schwefel, Arsen und/oder Antimon enthaltenden Katalysatorgiften belasteten Stoffströmen.

Mit dem erfindungsgemäßen Verfahren werden Alkine, Diene, einfach ungesättigte Kohlenwasserstoffe und/oder Sauerstoff beispielsweise aus Olefinströmen für die Polymerisation, speziell an Metallocenkatalysatoren, aus in Kunststoffrecyclinganlagen erzeugten Pyrolysegasen oder aus mit Schwefel, Arsen und/oder Antimon enthaltenden Katalysatorgiften belasteten und durch mit mittels Hydrierung entfernbaren Verbindungen verunreinigten Stoffströmen entfernt.

Die Durchführung des erfindungsgemäßen Verfahrens ist sowohl in der Gasphase als auch in der Flüssigphase möglich. Im letzteren Fall kann sowohl eine Riesel- als auch eine Sumpffahrweise gewählt werden. Zur Hydrierung wird die benötigte Menge Wasserstoff vor dem Hydrierreaktor zugegeben. Die zuzugebende Wasserstoffmenge bemißt sich nach den vorhandenen und zu entfernenden Verunreinigungen, wobei vorteilhafterweise ein Überschuß, beispielsweise ein zwei- bis dreifacher Überschuß an Wasserstoff zugegeben wird. Im allgemeinen wird der Wasserstoff im Hydrierreaktor fast vollständig verbraucht. Alkine und Diene werden, verglichen mit einfach ungesättigten Kohlenwasserstoffen, bevorzugt hydriert, so daß mit dem erfindungsgemäßen Verfahren auch eine Entfernung von Alkinen und Dienen aus Olefinströmen möglich ist. Beispielsweise kann in Ethylenströmen vorhandenes Acetylen oder in Propylenströmen vorhandenes Propin oder Propadien oder in Butadienströmen vorhandenes Vinylacetylen hydrierend entfernt werden. Ein gewisser, jedoch vergleichsweise kleiner Anteil an Alkenhydrierung zu den entsprechenden Alkanen ist jedoch meistens unvermeidbar. Im erfindungsgemäßen Verfahren wird gemeinsam mit den organischen ungesättigten Verbindungen nach Maßgabe der zugegebenen Wasserstoffmenge auch Sauerstoff aus dem Stoffstrom entfernt.

Das erfindungsgemäße Verfahren wird unter üblichen Hydrierbedingungen für edelmetallhaltige Hydrierkatalysatoren durchgeführt, beispielsweise bei Raumtemperatur oder Temperaturen oberhalb von Raumtemperatur, bevorzugterweise bei oder oberhalb von 40 °C und in besonders bevorzugter Weise bei oder oberhalb von 50 °C. Wird das Verfahren in der Gasphase durchgeführt, so wird üblicherweise bei oder unterhalb einer Temperatur von 200 °C gearbeitet, bevorzugterweise bei oder unterhalb von 180 °C und in besonders bevorzugter Weise bei oder unterhalb von 150 °C. Wird das Verfahren in der Flüssigphase durchgeführt, so wird üblicherweise bei oder unterhalb einer Temperatur von 150 °C gearbeitet, bevorzugterweise bei oder unterhalb von 100 °C und in besonders bevorzugter Weise bei oder unterhalb von 80 °C. Der anzuwendende Druck liegt bei der Durchführung des Verfahrens in der Gasphase üblicherweise oberhalb atmosphärischen Drucks, in bevorzugter Weise oberhalb 5 bar und in besonders bevorzugter Weise bei oder oberhalb von 10 bar sowie üblicherweise unterhalb von 50 bar, bevorzugterweise unterhalb von 40 bar und in besonders bevorzugter Weise bei oder unterhalb von 30 bar. Bei der Durchführung des Verfahrens in der Flüssigphase liegt der Druck üblicherweise oberhalb 5 bar, in bevorzugter Weise oberhalb 10 bar und in besonders bevorzugter Weise bei oder oberhalb von 15 bar sowie üblicherweise unterhalb von 100 bar, bevorzugterweise unterhalb von 80 bar und in besonders bevorzugter Weise bei oder unterhalb von 50 bar. Der Durchsatz durch den Reaktor, ausgedrückt als Raumgeschwindigkeit, beträgt bei der Durchführung des Verfahrens in der Gasphase üblicherweise mehr als 100 h⁻¹, in beispielsweise mehr als 500 h⁻¹ und in bevorzugter Weise 1000 h⁻¹ oder mehr sowie üblicherweise weniger als 10000 h⁻¹, beispielsweise weniger als 6000 h⁻¹ und in bevorzugter Weise 4000 h⁻¹ oder weniger. Bei der Durchführung des Verfahrens in der Flüssigphase beträgt der Durchsatz durch den Reaktor, ausgedrückt als Raumgeschwindigkeit, üblicherweise mindestens 0,1 h⁻¹, beispielsweise mehr als 0,5 h⁻¹ und in bevorzugter Weise 1 h⁻¹ oder mehr sowie üblicherweise höchstens 20 h⁻¹, beispielsweise weniger als 10 h⁻¹ und in bevorzugter Weise 5 h⁻¹ oder weniger. Wie bei praktisch allen Hydrierkatalysatoren ist ein gewisser langsamer Aufbau von Koksablagerungen auf dem Katalysator möglich, der jedoch durch periodisches Entkoken durch Behandlung des Katalysators mit Wasserdampf und Luft in dem Fachmann bekannter Weise entfernt werden kann. Im allgemeinen sind Zykluslängen von 1 bis 2 Jahren bei der Durchführung der Hydrierung in der Gasphase und von 2 bis 3 Jahren bei der Durchführung der Hydrierung in der Flüssigphase erreichbar. Die Gesamtlebensdauer des Katalysators kann dabei 5 bis 10 Jahre betragen.

Der zu reinigende Stoffstrom kann nach der Durchführung des erfindungsgemäßen Verfahrens noch Schwefel, Arsen und/oder Antimon enthaltende Katalysatorgifte, nicht vollständig abreagierten Sauerstoff, Kohlenmonoxid und/oder Wasserstoff enthalten. Diese Verunreinigungen können, falls erforderlich, in weiteren Reinigungsschritten entfernt werden.

Dazu werden beispielsweise Schwefel, Arsen und/oder Antimon enthaltende Katalysatorgifte und/oder restlicher Sauerstoff in einem zweiten Reinigungsschritt an einer Kontaktmasse durch Adsorption abreichert oder entfernt und/oder restlicher Sauerstoff, Kohlenmonoxid und/oder restlicher Wasserstoff zumindest teilweise katalytisch zu Wasser und Kohlendioxid umgesetzt. In diesem Reinigungsschritt werden dabei aus dem Stoffstrom Schwefel, Arsen und/ oder Antimon enthaltende Verbindungen und/oder noch vorhandener restlicher Sauerstoff entfernt. Dazu wird der Stoffstrom nach seiner Behandlung mit dem erfindungsgemäßen Verfahren in einem Reaktor über eine Kontaktmasse geleitet, die Schwefel, Arsen und Antimon enthaltende Verbindungen absorbiert sowie Sauerstoff absorbiert und/oder Sauerstoff durch Katalyse seiner Reaktion mit Kohlenmonoxid und/oder Wasserstoff aus dem Stoffstrom entfernt. Dies kann beispielsweise unter Verwendung der dem Fachmann bekannten, von Artrip et al., l. c., beschriebenen, Kupfer- und Zinkoxide enthaltenden Kontaktmassen, sofern diese zusätzlich noch metallisches Kupfer enthalten, geschehen.

Der zu reinigende Stoffstrom kann in einem dritten Reinigungsschritt, sofern erforderlich, zur Entfernung von restlichem Kohlenmonoxid und Wasserstoff über eine Kontaktmasse geleitet werden, die Kohlenmonoxid und/oder Wasserstoff aus dem Stoffstrom absorptiv und/oder durch chemische Reaktionen entfernt. Dies kann beispielsweise unter Verwendung der dem Fachmann bekannten, von Artrip et al., l. c., beschriebenen, Kupfer- und Zinkoxide enthaltenden Kontaktmassen geschehen.

Sofern der zu reinigende Stoffstrom nicht von Schwefel, Arsen und/oder Antimon enthaltenden Katalysatorgiften und/oder überschüssigem Sauerstoff befreit werden muß, kann der beschriebene zweite Reinigungsschritt entfallen und der beschriebene dritte Reinigungsschritt direkt im Anschluß an das erfindungsgemäße Verfahren durchgeführt werden.

Die genannten Kontaktmassen reagieren mit Kohlenmonoxid unter Bildung von metallischem Kupfer und Kohlendioxid sowie mit Wasserstoff unter Bildung von metallischem Kupfer und Wasser. Beim Betrieb wird also das in der Kontaktmasse enthaltene Kupferoxid allmählich in metallisches Kupfer umgewandelt und die Kapazität der Kontaktmasse für die Umwandlung von Kohlenmonoxid und Wasserstoff zu Kohlendioxid und Wasser erschöpft sich im Laufe der Zeit. Im zweiten und dritten Reinigungsschritt können im Prinzip identische Kontaktmassen eingesetzt werden, die sich nur dadurch unterscheiden, daß die Kontaktmasse des zweiten Reinigungsschritts zu Betriebsbeginn einen Anteil metallisches Kupfer enthält, der bei einem stöchiometrischen Sauerstoffüberschuß relativ zum Kohlenmonoxid- und Wasserstoffgehalt im Stoffstrom allmählich in Kupferoxid umgewandelt wird, während die Kontaktmasse des dritten Reinigungsschritts zu Betriebsbeginn kein metallisches Kupfer enthält, dieses aber durch Reaktion mit Kohlenmonoxid und Wasserstoff allmählich in metallisches Kupfer umgewandelt wird. Es kann also dieselbe Kontaktmasse, einmal im teilweise reduzierten Zustand und einmal im oxidierten Zustand, sowohl für den zweiten als auch für den dritten Reinigungschritt eingesetzt werden. Derartige Kontaktmassen sind kommerziell erhältlich und können beispielsweise unter der Bezeichnung R3-15 bei BASF Aktiengesellschaft, Ludwigshafen, Deutschland, bezogen werden.

Eine derartige Kombination von Reinigungsschritten vermeidet die Nachteile der bekannten Reinigungsverfahren, insbesondere massive Fouling-Probleme oder die Möglichkeit einer Kupferacetylid-Bildung und ist dabei mit höchstens drei anzwendenden Reinigungsstufen auch wirtschaftlicher als die bekannten Verfahren.

Stoffströme, aus denen mit den beschriebenen Verfahren die genannten Verunreinigungen entfernt worden sind, enthalten Anteile an im Verlauf der Reinigung entstandenen Nebenprodukten, nämlich Kohlendioxid, Wasser und/oder Alkanen. Diese Nebenprodukte verhalten sich in weiteren Reaktionen, denen die gereinigten Stoffströme unterworfen werden, im allgemeinen inert. Falls erforderlich oder gewünscht, können diese Nebenprodukte jedoch auch nach der Durchführung des erfindungsgemäßen Verfahrens aus dem gereinigten Stoffstrom auf dem Fachmann bekannte Weise, beispielsweise durch Absorption an mikroporösen Feststoffen, abgetrennt werden.

### Beispiel

40 kg Kieselgur Celite® 209 (Marke der Manville Corp., U.S.A.) und 12,9 kg SiO₂-Pulver (erhältlich unter der Bezeichnung D11-10 von BASF Aktiengesellschaft, Ludwigshafen) wurden mit 1 kg Polyacrylat Aqualic® CA W3 (erhältlich von BASF Aktiengesellschaft, Ludwigshafen) in einem Mix-Muller (Kollergang) innig vermischt. Dazu werden unter Kollern 44 kg vollentsalztes Wasser gegeben. Innerhalb von 5 Minuten werden 3,6 kg Natron-Wasserglaslösung und 2,7 Liter einer 25 %-igen wäßrigen Ammoniaklösung gegeben. Nach 15 Minuten Kollern wurden weitere 3 Liter Wasser zugesetzt. Die erhaltene Masse wurde in einem Extruder zu 4 mm-Strängen verformt, dann 2 Stunden bei 120 °C getrocknet und 2 Stunden bei 800 °C kalziniert. Der so erhaltene Träger wies ein Rüttelgewicht von 500 g/l und eine Gesamtporosität von 0,76 ml/g auf. Der Anteil an Makroporen an der Gesamtporosität betrug 100 % und seine BET-Oberfläche 3,8 m²/g. Als Komponenten der Aktivmasse wurden Palladium und Silber durch Tränkung nach der "incipient wetness"-Methode (d. h., die Tränklösung wird vom Träger gerade vollständig aufgesogen) mit einer wäßrige Lösung von Palladiumnitrat und Silbernitrat aufgebracht. Die imprägnierten Stränge wurden bei 120 °C über 16 h getrocknet und 5 h bei 250 °C kalziniert. Der fertige Katalysator enthielt je 0,5 Gew.-% Palladium und Silber.

## Patentansprüche

1. Katalysator, der in seiner Aktivmasse 0,05 bis 1,0 Gew.-% mindestens eines Metalls oder einer Verbindung eines Metalls der 10. Gruppe des Periodensystems der Elemente und 0,05 bis 1,0 Gew.-% mindestens eines Metalls oder einer Verbindung eines Metalls der 11. Gruppe des Periodensystems der Elemente, wobei das Gewichtsverhältnis des enthaltenen Metalls der 11. Gruppe zum enthaltenen Metall der 10. Gruppe von 0,95 bis 1,05 beträgt, und als Träger einen Siliciumdioxid enthaltenden Katalysatorträger mit einer BET-Oberfläche zwischen 2 und 400 m²/g enthält, und wobei mindestens 20 % des Gesamtporenvolumens des Katalysators in Poren mit einem Durchmesser oberhalb von 100 Nanometern vorliegt.

2. Katalysator nach Anspruch 1, wobei das Metall der 10. Gruppe des Periodensystems Palladium ist.

3. Katalysator nach Anspruch 1, wobei das Metall der 11. Gruppe des Periodensystems Silber ist.

4. Katalysator nach Anspruch 1, dessen Aktivmasse aus metallischem Palladium und metallischem Silber besteht.

5. Katalysator nach Anspruch 1, dessen Träger Kieselgur enthält.

6. Verfahren zur Entfernung von Alkinen, Dienen, einfach ungesättigten Kohlenwasserstoffen und/oder Sauerstoff aus Stoffströmen durch Hydrierung, **dadurch gekennzeichnet, daß** man den Alkine, Diene, einfach ungesättigte Kohlenwasserstoffen und/ oder Sauerstoff enthaltenden Stoffstrom in Gegenwart des in Anspruch 1 beschriebenen Katalyators mit Wasserstoff umsetzt.

7. Verfahren nach Anspruch 6, **dadurch gekennzeichnet, daß** man einen mit Schwefel, Arsen und/oder Antimon enthaltenden Katalysatorgiften belasteten Stoffstrom verwendet.

8. Verfahren nach Anspruch 7, **dadurch gekennzeichnet, daß** man in einer anschließenden zweiten Reinigungsstufe Schwefel, Arsen und/oder Antimon enthaltende Verbindungen und/oder restlichen Sauerstoff aus dem Stoffstrom an einer Kontaktmasse durch Adsorption abreichert oder entfernt und/oder restlichen Sauerstoff, etwaige vorhandenes Kohlenmonoxid und/oder restlichen Wasserstoff zumindest teilweise katalytisch zu Wasser und Kohlendioxid umsetzt.

9. Verfahren nach Anspruch 7, **dadurch gekennzeichnet, daß** man in einer anschließenden zweiten Reinigungsstufe etwaige vorhandenes Kohlenmonoxid und/oder restlichen Wasserstoff an einer Kontaktmasse in Kohlendioxid und/oder Wasser umwandelt.

10. Verfahren nach Anspruch 8, **dadurch gekennzeichnet, daß** man in einer anschließenden dritten Reinigungsstufe etwaige vorhandenes Kohlenmonoxid und/oder restlichen Wasserstoff an einer Kontaktmasse in Kohlendioxid und/oder Wasser umwandelt.

## Claims

1. A catalyst comprising, in its active composition, from 0.05 to 1.0% by weight of at least one metal or compound of a metal of the 10th group of the Periodic Table of the Elements and from 0.05 to 1.0% by weight of at least one metal or compound of a metal of the 11th group of the Periodic Table of the Elements, with the weight ratio of the metal of the 11th group to the metal of the 10th group being from 0.95 to 1.05, and, as support, an SiO₂-containing catalyst support having a BET surface area of from 2 to 400 m²/g, wherein at least 20% of the total pore volume of the catalyst is made up by pores having a diameter greater than 100 nanometers.

2. A catalyst as claimed in claim 1, wherein the metal of the 10th group of the Periodic Table is palladium.

3. A catalyst as claimed in claim 1, wherein the metal of the 11th group of the Periodic Table is silver.

4. A catalyst as claimed in claim 1 whose active composition comprises metallic palladium and metallic silver.

5. A catalyst as claimed in claim 1 whose support comprises kieselguhr.

6. A process for removing alkynes, dienes, monounsaturated hydrocarbons and/or oxygen from streams of materials by hydrogenation, which comprises reacting the stream comprising alkynes, dienes, monounsaturated hydrocarbons and/or oxygen with hydrogen in the presence of a catalyst as described in claim 1.

7. A process as claimed in claim 6, wherein a stream contaminated with sulfur-, arsenic- and/or antimony-containing catalyst poisons is used.

8. A process as claimed in claim 7, wherein, in a subsequent second purification step, sulfur-, arsenic- and/or antimony-containing compounds and/or residual oxygen are partially or completely removed from the stream by adsorption on a catalyst and/or residual oxygen, any carbon monoxide and/or residual hydrogen present are at least partially converted catalytically into water and carbon dioxide.

9. A process as claimed in claim 7, wherein, in a subsequent second purification step, any carbon monoxide and/or residual hydrogen present are converted into carbon dioxide and/or water over a catalyst.

10. A process as claimed in claim 8, wherein, in a subsequent third purification step, any carbon monoxide and/or residual hydrogen present are converted into carbon dioxide and/or water over a catalyst.

## Revendications

1. Catalyseur, qui contient, dans sa masse active, 0,05 à 1,0 % en poids d'au moins un métal ou d'un composé d'un métal du dixième groupe du Système Périodique des Eléments et 0,05 à 1,0 % en poids d'au moins un métal ou d'un composé d'un métal du onzième groupe du Système Périodique des Eléments, le rapport pondéral entre le métal contenu du onzième groupe et le métal contenu du dixième groupe étant de 0,95 à 1,05, et, comme support, un support de catalyseur contenant du dioxyde de silicium et présentant une surface spécifique BET comprise entre 2 et 400 m²/g, au moins 20 % du volume poreux global du catalyseur se présentant dans des pores ayant un diamètre supérieur à 100 nanomètres.

2. Catalyseur suivant la revendication 1, dans lequel le métal du dixième groupe du Système Périodique est du palladium.

3. Catalyseur suivant la revendication 1, dans lequel le métal du onzième groupe du Système Périodique est de l'argent.

4. Catalyseur suivant la revendication 1, dont la masse active est constituée de palladium métallique et d'argent métallique.

5. Catalyseur suivant la revendication 1, dont le support contient du kieselguhr.

6. Procédé d'élimination d'alcynes, de diènes, d'hydrocarbures monoinsaturés et/ou d'oxygène à partir de courants de matière, par hydrogénation, **caractérisé en ce qu'**on fait réagir avec de l'hydrogène le courant de matière contenant des alcynes, des diènes, des hydrocarbures monoinsaturés et/ou de l'oxygène, en présence du catalyseur décrit dans la revendication 1.

7. Procédé suivant la revendication 6, **caractérisé en ce qu'**on utilise un courant de matière chargé de poisons de catalyseur contenant du soufre, de l'arsenic et/ou de l'antimoine.

8. Procédé suivant la revendication 7, **caractérisé en ce que**, dans une deuxième étape de purification ultérieure, on réalise, par adsorption sur une masse catalytique, un appauvrissement ou une élimination à partir du courant de matière des composés contenant du soufre, de l'arsenic et/ou de l'antimoine et/ou de l'oxygène résiduaire et/ou on fait réagir d'une manière au moins partiellement catalytique de l'oxygène résiduaire, du monoxyde de carbone éventuellement présent et/ou de l'hydrogène résiduaire pour former de l'eau et du dioxyde de carbone.

9. Procédé suivant la revendication 7, **caractérisé en ce que**, dans une deuxième étape de purification ultérieure, on transforme du monoxyde de carbone éventuellement présent et/ou de l'hydrogène résiduaire en dioxyde de carbone et/ou eau sur une masse catalytique.

10. Procédé suivant la revendication 8, **caractérisé en ce que**, dans une troisième étape de purification ultérieure, on transforme du monoxyde de carbone éventuellement présent et/ou de l'hydrogène résiduaire en dioxyde de carbone et/ou eau sur une masse catalytique.
